# EUROPÄISCHE PATENTANMELDUNG

(11) **EP 4 850 520 A1**
(43) Veröffentlichungstag der Anmeldung: **09.12.2026**
(21) Anmeldenummer: 26173909.8
(22) Anmeldetag: 22.04.2026
(51) Int. Cl.: A01D 61/04, A01D 90/10, B65G 19/22, F16G 13/14, F16G 15/04, F16G 15/12

(54) **KETTENGLIED, KETTE, BUNKER FÜR EIN LANDWIRTSCHAFTLICHES FAHRZEUG UND LANDWIRTSCHAFTLICHES FAHRZEUG**

(30) Priorität: 05.06.2025 DE 102025122117
(71) Anmelder: Exel Industries, 51200 Epernay (FR)
(72) Erfinder: Potuschnik, Michael, 84085 LANGQUAID (DE)
(74) Vertreter: Lavoix

(57) **Zusammenfassung**

Die Erfindung betrifft ein Kettenglied (1) einer Kette, insbesondere einer Kratzbodenkette eines landwirtschaftlichen Fahrzeugs, umfassend: zwei Schenkel (3a, 3b), die sich parallel zur einer Längsachse (X) des Kettenglieds (1) erstrecken; einen ersten Steg (10), wobei der erste Steg erste Enden (5a, 5b) der zwei Schenkel verbindet; mindestens einen Haken (14) mit einem Maul (16), wobei der mindestens eine Haken zwischen zweiten Enden (7a, 7b) der zwei Schenkel (3a, 3b) angeordnet ist, wobei die zweiten Enden gegenüber den ersten Enden (5a, 5b) in Richtung der Längsachse (X) angeordnet sind, und wobei das mindestens eine Maul (16) schräg zur Längsachse (X) in Richtung des ersten Stegs (10) geöffnet ist; wobei das Kettenglied (1) mindestens eine Schmutzabweisungsnase (22) umfasst, wobei die mindestens eine Schmutzabweisungsnase (3a, 3b) vor dem Maul (16) bzw. den Mäulern angeordnet ist und senkrecht zur Längsachse (X) hervorragt bzw. hervorragen.

## Beschreibung

Die Erfindung betrifft ein Kettenglied einer Kette, insbesondere einer Kratzbodenkette eines landwirtschaftlichen Fahrzeugs.

Ferner betrifft die Erfindung eine Kette, insbesondere eine Kratzbodenkette eines landwirtschaftlichen Fahrzeugs.

Schließlich betrifft die Erfindung einen Bunker für ein landwirtschaftliches Fahrzeug, insbesondere ein Rübenbunkerfahrzeug, und ein landwirtschaftliches Fahrzeug, insbesondere Rübenbunkerfahrzeug.

Ketten von landwirtschaftlichen Maschinen werden vielfältig verwendet. Zum Beispiel wird eine solche Kette als Kratzbodenkette in einem Bunker eines Rübenerntefahrzeugs,. Manche solcher Ketten weisen Kettenglieder mit einem Haken und einem Steg auf, wobei der Steg in dem Maul des Hakens eines angrenzenden Kettenglieds angeordnet wird, um ein Scharnier zu bilden.

Solche Ketten sind während der Benutzung vielen Erdpartikeln und Pflanzenteilen ausgesetzt. Dadurch geraten bei der Bewegung der Kette diese Erdpartikel oder Pflanzenteile in das durch Steg und Haken gebildete Scharnier. Dies erhöht den Verschleiß der einzelnen Kettenglieder.

Aufgabe der Erfindung ist es daher, das Kettenglied derart weiterzuentwickeln, dass es die Nachteile des Stands der Technik überwindet, insbesondere robuster und weniger verschleißanfällig ist.

Gemäß der Erfindung wird ein Kettenglied einer Kette zur Verfügung gestellt, insbesondere einer Kratzbodenkette eines landwirtschaftlichen Fahrzeugs, umfassend: zwei Schenkel, die sich parallel zur einer Längsachse des Kettenglieds erstrecken; einen ersten Steg, wobei der erste Steg erste Enden der zwei Schenkel verbindet; mindestens einen Haken mit einem Maul, wobei der mindestens eine Haken zwischen zweiten Enden der zwei Schenkel angeordnet ist, wobei die zweiten Enden gegenüber den ersten Enden in Richtung der Längsachse angeordnet sind, und wobei das mindestens eine Maul schräg zur Längsachse in Richtung des ersten Stegs geöffnet ist;
dadurch gekennzeichnet, dass das Kettenglied mindestens eine Schmutzabweisungsnase umfasst, wobei die mindestens eine Schmutzabweisungsnase vor dem Maul bzw. den Mäulern angeordnet ist und senkrecht zur Längsachse hervorragt bzw. hervorragen.

Weitere Ausführungsformen können sich auf eines oder mehrere der folgenden Merkmale beziehen, die in beliebig kombiniert werden können:
- die mindestens eine Schmutzabweisungsnase eine maximale Höhe in Bezug auf die Längsachse zwischen 50% und 120% der maximalen Höhe des Hakens in Bezug auf die Längsachse aufweist;
- das Maul eine Maulöffnung mit einer Öffnungsrichtung aufweist, die einen Winkel zwischen 30 Grad und 60 Grad in Bezug auf die Längsachse hat;
- das Kettenglied umfasst einen zweiten Steg, der die zweiten Enden in Richtung der Längsachse der zwei Schenkel verbindet, wobei der oder die Haken und/oder der/oder die Schmutzabweisungsnasen an dem zweiten Steg angeformt ist bzw. sind;
- die mindestens eine Schmutzabweisungsnase quer zur Längsachse mindestens 80% der Breite des mindestens einen Hakens aufweist;
- das Kettenglied umfasst mehrere Schmutzabweisungsnasen, die voneinander beabstandet sind;
- die mindestens eine Schmutzabweisungsnase im Querschnitt entlang der Längsachse eine dreieckige Form aufweist;
- die zwei Schenkel, der mindestens eine Haken, die mindestens eine Schmutzabweisungsnase, der erste Steg und/oder der zweite Steg einstückig ausgeführt sind; und/oder

Kettenglied nach einem der vorangehenden Ansprüche, wobei der erste Steg kreiszylindrisch ist. Ferner wird gemäß der Erfindung wird eine Kette bereitgestellt , insbesondere Kratzbodenkette eines landwirtschaftlichen Fahrzeugs, mit einer Vielzahl von Kettengliedern nach einer hier beschriebenen Ausführungsform, wobei jeweils ein erster Steg eines ersten Kettenglieds in dem Maul eines zweiten, benachbarten Kettenglieds angeordnet ist, um ein Scharnier zu bilden.

Zudem betrifft die Erfindung einen Bunker für ein landwirtschaftliches Fahrzeug, insbesondere ein Rübenbunkerfahrzeug, umfassend mindestens zwei Ketten nach einer hier beschriebenen Ausführungsform, wobei jeweils zwei Ketten parallel angeordnet sind und mit einer Vielzahl von Transportholmen quer zur Längsachse der Kette verbunden sind..

Gemäß einer Ausführungsform ist mindestens ein Maul eines Kettenglieds einer Kette schräg zur Längsachse des jeweiligen Kettenglieds in eine Förderrichtung geöffnet.

Schließlich betrifft die Erfindung ein landwirtschaftliches Fahrzeug, insbesondere Rübenbunkerfahrzeug, umfassend einen Bunker nach einer hier beschriebenen Ausführungsform.

Die in der Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

Weitere Merkmale und Vorteile der Erfindung ergeben sich aus der nachstehenden Beschreibung, in der ein Ausführungsbeispiel der Erfindung anhand schematischer Zeichnungen im Einzelnen erläutert wird. Dabei zeigt:
Fig. 1 zeigt eine perspektivische Ansicht eines Kettenglieds gemäß einer Ausführungsform der Erfindung;
Fig. 2 zeigt eine Seitenansicht eines Kettenglieds gemäß der Ausführungsform von Fig. 1;
Fig. 3 zeigt eine Draufsicht eines Kettenglieds gemäß der Ausführungsform von Fig. 1;
Fig. 4 zeigt eine Seitenschnittansicht eines Kettenglieds gemäß des Schnitts A-A in Fig. 3;
Fig. 5 zeigt eine Seitenansicht einer Kette mit mehreren Kettengliedern gemäß des Schnitts A-A in Fig. 3; und
Fig. 6 zeigt eine perspektivische Ansicht eines Bunkers auf einem landwirtschaftlichen Fahrzeug.

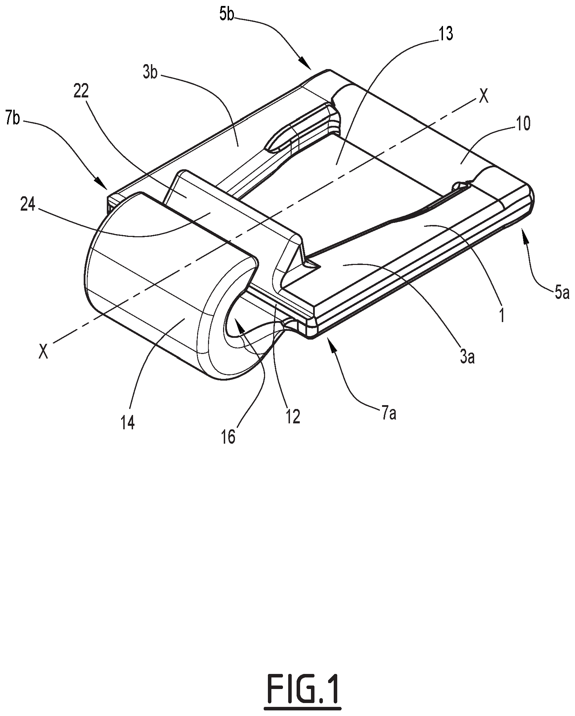

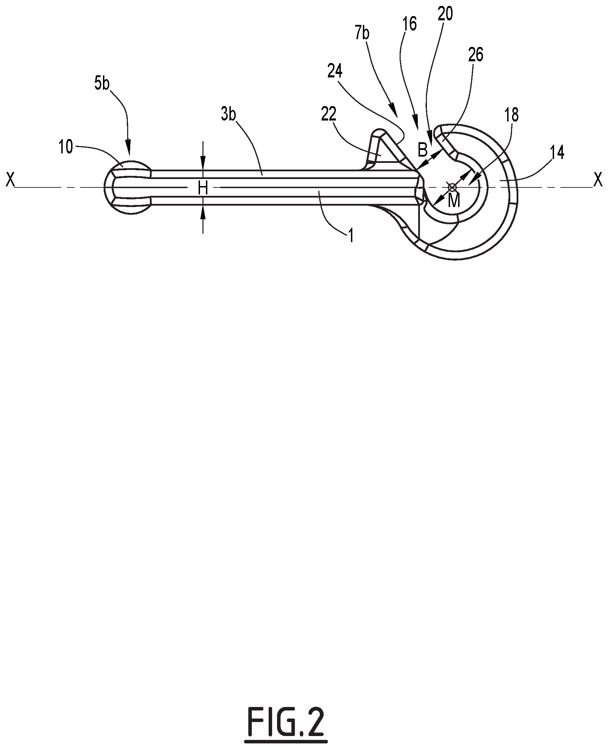

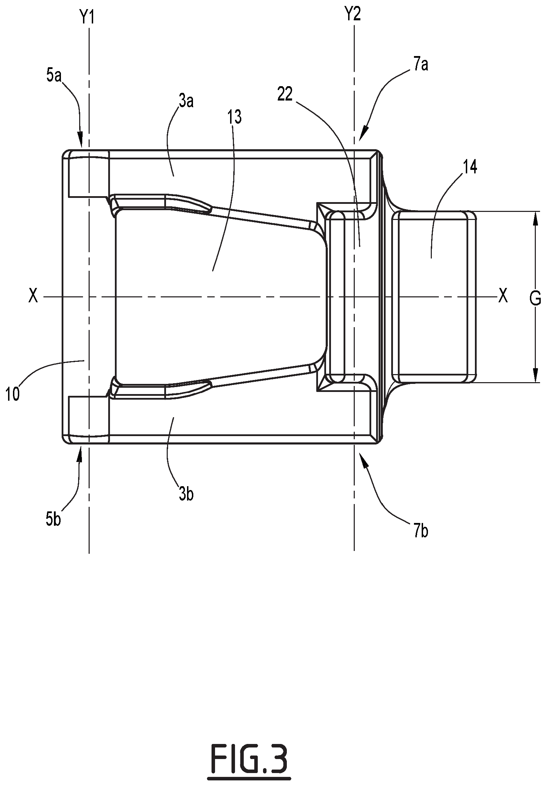

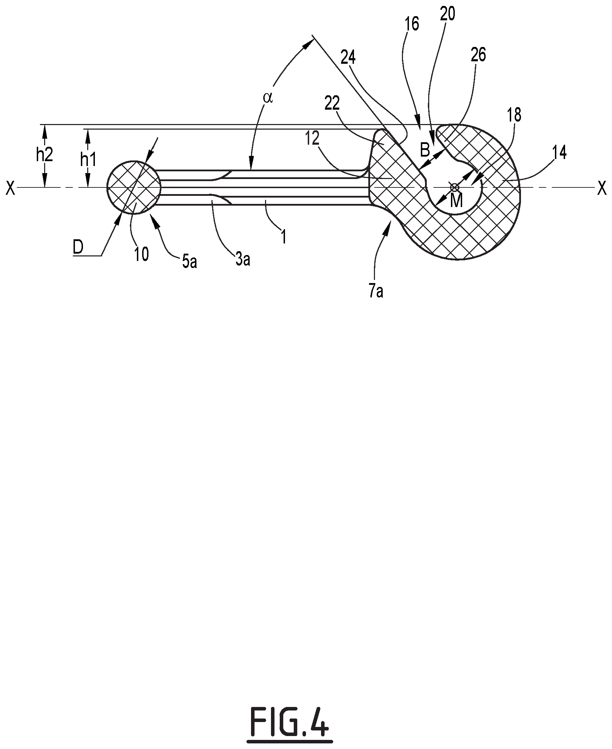

Fig. 1 zeigt eine perspektivische Ansicht eines Kettenglieds 1 gemäß einer Ausführungsform der Erfindung. Fig. 1 wird gemeinsam mit Fig. 2, die eine Seitenansicht zeigt, Fig. 3, die eine Draufsicht zeigt, und Fig. 4, die eine Seitenschnittansicht zeigt beschrieben.

Das Kettenglied 1 weist eine Längsachse X auf.

Das Kettenglied umfasst zwei Schenkel 3a, 3b. Die Schenkel 3a, 3b haben jeweils ein erstes Ende 5a, 5b und ein zweites Ende 7a, 7b an der gegenüberliegenden Seite in Richtung der Längsachse X. Die Schenkel 3a, 3b erstrecken sich parallel zur Längsachse X.

Die Schenkel 3a, 3b weisen jeweils eine im Wesentlichen konstante Höhe H senkrecht zur Längsachse X auf. Die Höhe wird in Fig. 2 in der Blattebene senkrecht zur Längsachse X gemessen. Insbesondere weisen die Schenkel 3a, 3b an ihren ersten Enden 5a, 5b die Höhe H auf. Beispielsweise ist die Höhe H zwischen 6 mm und 10 mm.

Das Kettenglied 1 umfasst ferner einen ersten Steg 10 auf, der die ersten Enden 5a, 5b der zwei Schenkel 3a, 3b verbindet. Der erste Steg 10 hat eine kreiszylindrische Form mit einer Achse Y1, die senkrecht zur Längsachse X und senkrecht zur Höhe H ist. Der erste Steg weist einen Durchmesser D auf. Beispielsweise ist der Durchmesser D zwischen 10mm und 15mm.

Gemäß einer Ausführungsform ist der Durchmesser D grösser als die Höhe H. Insbesondere ist der Durchmesser D mindestens 20% grösser als die Höhe H.

An den zweiten Enden 7a, 7b der Schenkel weist das Kettenglied 1 einen zweiten Steg 12 auf, der die zweiten Enden 7a, 7b der zwei Schenkel 3a, 3b verbindet. Der zweite Steg 12 erstreckt sich entlang einer Achse Y2, die senkrecht zur Längsachse X und senkrecht zur Höhe H ist. Die Achse Y2 ist parallel zur Achse Y1.

Gemäß einer Ausführungsform formen die zwei Schenkel 3a, 3b und der erste und zweite Steg 10, 12 gemeinsam ein Rechteck mit einer Aussparung 13, die von den zwei Schenkeln 3a, 3b und dem ersten und zweiten Steg 10, 12 umfasst wird.

Die Aussparung 13 ist an den ersten Enden der Schenkel 3a, 3b und angrenzend zum ersten Steg 10 zur Aufnahme eines Hakens eines angrenzenden Kettenglieds gebildet.

In einer Ausführungsform verjüngt sich zwischen der Mitte der Aussparung 13 in Richtung der Längsachse X und dem zweiten Steg 12 die Aussparung in der Draufsicht, siehe Fig. 3.

Ferner umfasst das Kettenglied 1 einen Haken 14. Der Haken 14 ist beispielsweise an den zweiten Enden 7a, 7b der zwei Schenkel 3a, 3b und/oder an dem zweiten Steg 12 angeformt. Beispielsweise ist der Haken 14 zwischen den zwei Schenkeln 3a, 3b angeordnet.

Der Haken 14 umfasst ein Maul 16. Das Maul 16 umfasst einen im wesentlichen zylinderförmigen Sitz 18 für den ersten Steg 10 eines benachbarten Kettenglieds. Daher weist der zylinderförmige Sitz 18 einen Durchmesser M auf, der grösser als Durchmesser D des ersten Stegs 10 ist. Beispielsweise ist der Durchmesser M weniger als 10% grösser als der Durchmesser D des ersten Stegs 10, insbesondere ist der Durchmesser M weniger als 5% grösser als der Durchmesser D des ersten Stegs 10.

Das Maul 16 hat eine Maulöffnung 20 mit einer Öffnungsbreite B.

Gemäß einer Ausführungsform entspricht die Öffnungsbreite B im Wesentlichen der Höhe H der Schenkel 3a, 3b. Somit kann ein Schenkel 3a, 3b seitlich in das Maul 16 geführt werden.

Die Öffnungsbreite B kleiner als der Durchmesser D.

Das Maul 16 ist schräg zur Längsachse X in Richtung des ersten Stegs 10 geöffnet. Mit anderen Worten, weist die Maulöffnung 20 eine Öffnungsrichtung mit einer Richtungskomponente in Richtung des ersten Stegs 10 auf.

In einer Ausführungsform hat die Maulöffnung 20 eine Öffnungsrichtung, die einen Winkel α zwischen 30 Grad und 70 Grad in Bezug auf die Längsachse X hat, insbesondere zwischen 40 Grad und 60 Grad, beispielsweise ungefähr 50 bis 55 Grad.

In der Ausführungsform der Figuren ist nur ein Haken 14 gezeigt, jedoch kann ein Kettenglied auch mehrere Haken 14 aufweisen. In einem solchen Fall sind die Mäuler der Haken fluchtend ausgerichtet. Mit anderen Worten haben die zylinderförmigen Sitze 18 der Haken 14 jeweils dieselbe Längsachse, die orthogonal zur Längsachse X des Kettenglieds 1 ist.

Das Kettenglied 1 umfasst ferner eine Schmutzabweisungsnase 22. Die Schmutzabweisungsnase 22 ist vor dem Maul 16 angeordnet, insbesondere vor der Maulöffnung 20, Die Schmutzabweisungsnase 22 erstreckt sich parallel zu der Achse Y1 und/oder der Achse Y2 insbesondere zwischen den zweiten Enden 7a, 7b, über eine gesamte Breite des Kettenglieds, oder einer Länge dazwischen.

Die Schmutzabweisungsnase 22 ragt senkrecht zur Längsachse X von den Schenkeln 3a, 3b hervor, insbesondere von der Seite der Schenkel 3a, 3b auf der sich das Maul 16 öffnet.

In einer Ausführungsform, ist die Schmutzabweisungsnase 22 an dem zweiten Steg 12 angeformt.

Die Schutzabweisungsnase 22 hat einen im Wesentlichen dreieckigen Querschnitt entlang der Längsachse X des Kettenglieds 4. Der dem Maul 16 zugewandte Schenkel 24 der Schmutzabweisungsnase 22 ist parallel zu der Hakenspitze 26 ausgerichtet.

Zwischen der Hakenspitze 26 und dem Schenkel 24 der Schmutzabweisungsnase befindet sich ein Abschnitt der Maulöffnung 20.

In einer Ausführungsform, weist die Schutzabweisungsnase 22 quer zur Längsachse X mindestens 80%, insbesondere mindestens 90%, der Breite G des Mauls 16 beziehungsweise des Hakens 14 auf. Die Breite G des Mauls 16 ist parallel zur Drehachse eines ersten Stegs 10 in dem Maul 16. Falls das Kettenglied mehrere Haken 14 aufweist, weist die Schutzabweisungsnase 22 beispielsweise quer zur Längsachse X die gemeinsame Breite G aller Haken zusammen auf.

In der in den Figuren gezeigten Ausführungsform, weist die Schmutzabweisungsnase 22 hat eine maximale Höhe h1 in Bezug auf die Längsachse X zwischen 50% und 120% der maximalen Höhe h2 des Hakens 14 in Bezug auf die Längsachse. Beispielsweise ist die maximale Höhe h1 der Schmutzabweisungsnase 22 zwischen 5% und 15% kleiner als die maximale Höhe h2 des Hakens 14.

Gemäß einer Ausführungsform sind die zwei Schenkel 3a, 3b, der mindestens eine Haken 14, die mindestens eine Schmutzabweisungsnase 22, der erste Steg 10 und/oder der zweite Steg 12 einstückig ausgeführt beziehungsweise geformt sind.

In einer Ausführungsform ist das Kettenglied 1 aus Metall gegossen. Jedes Kettenglied wird einzeln warm geformt oder geschmiedet.

In einer nicht gezeigten Ausführungsform weist das Kettenglied mehrere Schmutzabweisungsnase 22 auf, die voneinander beabstandet sind.

In einem Beispiel weisen die Schmutzabweisungsnasen gemeinsam eine Breite G auf, die der Breite G des Hakens 14 oder aller Haken 14 entspricht.

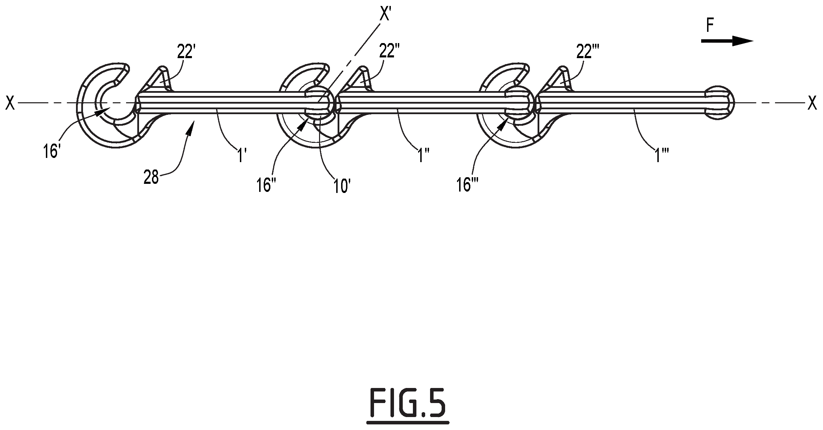

Wie in Figur 5 gezeigt, können mehrere Kettenglieder 1', 1", 1‴ zu einer Kette 28 zusammengefügt werden. Die Kettenglieder 1', 1", 1‴ werden kalt zusammengebaut.

Die Kettenglieder 1', 1" und 1‴ entsprechen einem der in Figur 1 bis 4 gezeigten Kettenglied 1. Dazu wird die Längsachse eines ersten Kettenglieds 1' entsprechend der Öffnungsrichtung des Mauls 16" des zweiten Kettenglieds 1" ausgerichtet. Dann ist die Längsachse des ersten Kettenglieds 1' auf die Achse X' ausgerichtet. Die Achse Y1 des ersten Stegs 10' des ersten Kettenglieds 1' ist dann fluchtend mit der Achse des Sitzes des zweiten Kettenglieds 1" ausgerichtet. Schließlich wird der erste Steg 10' des ersten Kettenglieds 1" seitlich in das Maul 16" des zweiten Kettenglieds 1" eingeschoben. Daraufhin kann das erste Kettenglied, in Figur 5 gegen den Uhrzeigersinn um die Achse Y1 des ersten Stegs 10' gedreht werden, sodass sich die Kettenglieder 1', 1" nicht mehr voneinander lösen können. Somit ist ein erster Steg 10' eines ersten Kettenglieds 1' in dem Maul 16" eines zweiten, benachbarten Kettenglieds 1" angeordnet.

Dadurch, dass die Höhe H der Schenkel 3a, 3b kleiner als der Durchmesser D des ersten Stegs 10 ist, sind die Kettenglieder gegen verschieben in der Zeichenebene von Fig. 5 gesichert.

Beispielsweise wird die Kette 28 in eine Förderrichtung F während des Einsatzes in einem landwirtschaftlichen Fahrzeug bewegt. Die jeweilige Schmutzabweisungsnase 22', 22", 22‴ verhindern, dass jeweils Schmutz in die jeweiligen Mäuler 16', 16", 16‴ der Kettenglieder 1', 1", 1‴ hineingetragen wird.

Gemäß einer Ausführungsform wird die Kette 28 als Kratzbodenkette eines landwirtschaftlichen Fahrzeugs verwendet. Eine solche Kette 28 hat eine Vielzahl von Kettengliedern nach hier beschriebenen Ausführungsformen.

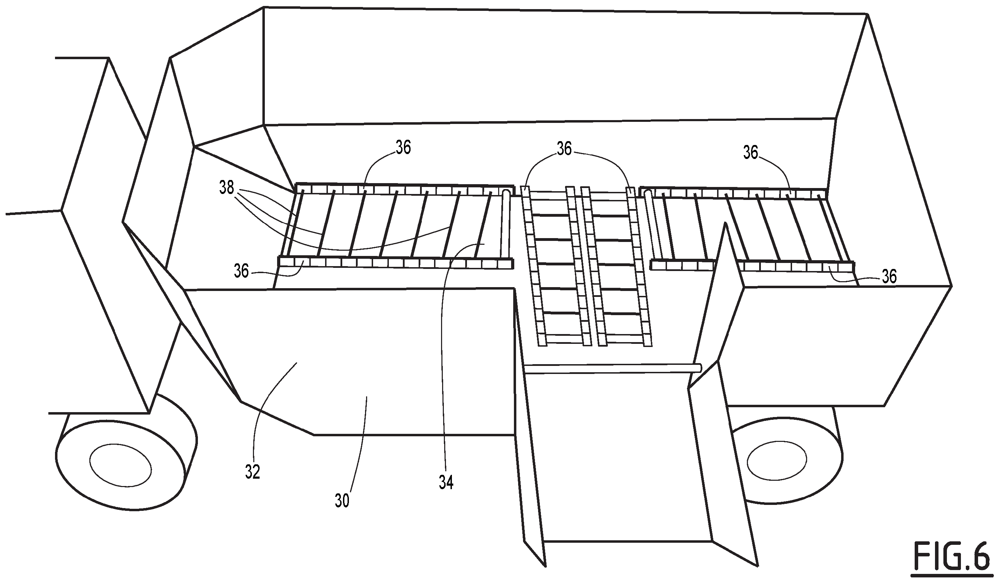

Fig. 6 zeigt ein landwirtschaftliches Fahrzeug 30. Das landwirtschaftliche Fahrzeug 30 weist einen Bunker 32 für pflanzliche landwirtschaftliche Produkte auf, insbesondere für Rüben. Beispielsweise ist das landwirtschaftliche Fahrzeug ein Rübenbunkerfahrzeug, wie ein Rübenerntefahrzeug, insbesondere ein Rübenroder. In einer anderen Ausführungsform ist das landwirtschaftliche Fahrzeug ein Rübensammelfahrzeug.

Das landwirtschaftliche Fahrzeug 30 kann selbstfahrend oder ein Anhänger sein.

Ein landwirtschaftliches Fahrzeug 30 ist ein Fahrzeug, das für die Landwirtschaft verwendet wird und ausgebildet ist. Beispielsweise weist ein landwirtschaftliches Fahrzeug 30 Reifen oder Einrichtungen auf, die ein Kompaktieren des Bodens auf Feldern verringern.

Der in Figur 6 gezeigte Bunker 32 weist einen Boden 34 auf. Über dem Boden laufen mehrere Ketten 36, beispielsweise eine erfindungsgemäße Kette nach Fig. 5. Jeweils zwei Ketten 36 sind parallel angeordnet und über Transportholme 38 zum Fördern von Rüben oder anderen landwirtschaftlichen Produkten verbunden. Wenn die Ketten 36 in Bewegung versetzt werden, schieben die Transportholme 38 die pflanzlichen landwirtschaftlichen Produkte wie Rüben weiter. Solche Ketten 36 werden Kratzbodenketten genannt.

### Bezugszeichenliste:

- 1,1',1",1‴: Kettenglied
- 3a, 3b: Schenkel
- 5a, 5b: erstes Ende
- 7a, 7b: zweites Ende
- 10: erster Steg
- 12: zweiter Steg
- 13: Aussparung
- 14: Haken
- 16,16',16", 16‴: Maul
- 18: Sitz
- 20: Maulöffnung
- 22, 22', 22", 22‴: Schmutzabweisungsnase
- 24: Schenkel
- 26: Hakenspitze
- 28: Kette
- 30: Fahrzeug
- 32: Bunker
- 34: Boden
- 36: Ketten
- 38: Transportholm

## Patentansprüche

1. Kettenglied (1) einer Kette, insbesondere einer Kratzbodenkette eines landwirtschaftlichen Fahrzeugs, umfassend:
zwei Schenkel (3a, 3b), die sich parallel zur einer Längsachse (X) des Kettenglieds (1) erstrecken;
einen ersten Steg (10), wobei der erste Steg erste Enden (5a, 5b) der zwei Schenkel verbindet;
mindestens einen Haken (14) mit einem Maul (16), wobei der mindestens eine Haken zwischen zweiten Enden (7a, 7b) der zwei Schenkel (3a, 3b) angeordnet ist, wobei die zweiten Enden gegenüber den ersten Enden (5a, 5b) in Richtung der Längsachse (X) angeordnet sind, und wobei das mindestens eine Maul (16) schräg zur Längsachse (X) in Richtung des ersten Stegs (10) geöffnet ist;
**dadurch gekennzeichnet, dass** das Kettenglied (1) mindestens eine Schmutzabweisungsnase (22) umfasst, wobei die mindestens eine Schmutzabweisungsnase (3a, 3b) vor dem Maul (16) bzw. den Mäulern angeordnet ist und senkrecht zur Längsachse (X) hervorragt bzw. hervorragen.

2. Kettenglied nach Anspruch 1, wobei die mindestens eine Schmutzabweisungsnase (22) eine maximale Höhe (h1) in Bezug auf die Längsachse (X) zwischen 50% und 120% der maximalen Höhe (h2) des Hakens (14) in Bezug auf die Längsachse (X) aufweist.

3. Kettenglied nach Anspruch 1, wobei das Maul (16) eine Maulöffnung (20) mit einer Öffnungsrichtung aufweist, die einen Winkel (α) zwischen 30 Grad und 60 Grad in Bezug auf die Längsachse (X) hat.

4. Kettenglied nach Anspruch 1 oder 2, umfassend einen zweiten Steg (12), der die zweiten Enden (7a, 7b) in Richtung der Längsachse (X) der zwei Schenkel (3a, 3b) verbindet, wobei der oder die Haken (14) und/oder der/oder die Schmutzabweisungsnasen (22) an dem zweiten Steg (12) angeformt ist bzw. sind.

5. Kettenglied nach einem der vorangehenden Ansprüche, wobei die mindestens eine Schmutzabweisungsnase (22) quer zur Längsachse mindestens 80% der Breite (G) des mindestens einen Hakens (14) aufweist.

6. Kettenglied nach einem der vorangehenden Ansprüche, umfassend mehrere Schmutzabweisungsnasen (22), die voneinander beabstandet sind.

7. Kettenglied nach einem der vorangehenden Ansprüche, wobei die mindestens eine Schmutzabweisungsnase im Querschnitt entlang der Längsachse (X) eine dreieckige Form aufweist.

8. Kettenglied nach einem der vorangehenden Ansprüche, wobei die zwei Schenkel (3a, 3b), der mindestens eine Haken (14), die mindestens eine Schmutzabweisungsnase (22), der erste Steg (10) und/oder der zweite Steg (12) einstückig ausgeführt sind.

9. Kettenglied nach einem der vorangehenden Ansprüche, wobei der erste Steg (10) kreiszylindrisch ist.

10. Kette (28, 36), insbesondere Kratzbodenkette eines landwirtschaftlichen Fahrzeugs (30), mit einer Vielzahl von Kettengliedern (1', 1", 1‴) nach einem der vorangehenden Ansprüchen, wobei jeweils ein erster Steg (10) eines ersten Kettenglieds (1', 1") in dem Maul (16", 16‴) eines zweiten, benachbarten Kettenglieds (1", 1‴) angeordnet ist, um ein Scharnier zu bilden.

11. Bunker (32) für ein landwirtschaftliches Fahrzeug (30), insbesondere ein Rübenbunkerfahrzeug, umfassend mindestens zwei Ketten (28, 36) nach Anspruch 10, wobei jeweils zwei Ketten (36) parallel angeordnet sind und mit einer Vielzahl von Transportholmen (38) quer zur Längsachse der Kette verbunden sind.

12. Bunker nach Anspruch 11, wobei mindestens ein Maul eines Kettenglieds einer Kette schräg zur Längsachse des jeweiligen Kettenglieds in eine Förderrichtung geöffnet ist.

13. Landwirtschaftliche Fahrzeug, insbesondere Rübenbunkerfahrzeug, umfassend einen Bunker nach Anspruch 11 oder 12.
